Europäisches Patentamt

(19) European Patent Office

Office européen des brevets

(11) Publication number: **0 453 300 A2**

## (12) EUROPEAN PATENT APPLICATION

(21) Application number: 91303514.3

(51) Int. Cl.⁵: **B60C 15/02, B60C 15/024**

(22) Date of filing: 19.04.91

(30) Priority: 20.04.90 JP 106245/90

(43) Date of publication of application:
23.10.91 Bulletin 91/43

(84) Designated Contracting States:
DE FR GB

(71) Applicant: SUMITOMO RUBBER INDUSTRIES
LIMITED
1-1 Tsutsuicho 1-chome Chuo-ku
Kobe-shi Hyogo-ken (JP)

(72) Inventor: Matsumura, Sadahiko
1101-gou, 2-2 Takakuradai 4-chome, Suma-ku
Kobe-shi, Hyogo-ken (JP)

(74) Representative: Stewart, Charles Geoffrey
SP TYRES UK LIMITED Tyre Technical
Division
Fort Dunlop Birmingham B24 9QT (GB)

(54) A motorcycle tyre and rim assembly.

(57) A tyre and rim assembly comprising a tyre (T) for a motorcycle having a pair of bead regions (4) and a rim (R) holding the bead regions (4) of the tyre (T), characterised in that the rim (R) has a flange (10) for supporting an outside surface (S1) of the tyre bead region (4), a rim seat (12) for supporting a bottom surface (S2) of the bead region (4) and a curved region (11) connecting smoothly between a lower end point (P1) in the tyre radial direction of the flange (10) and an outer end point (P2) in the tyre axial direction of the rim seat the said rim seat (12) comprising a straight tapered part (12A) extending inwardly in the tyre axial direction from the outer end point (P2) of the rim seat (12) and being inclined upwardly towards the tyre equator at an angle θ in the range of 4 to 8 degrees with respect to the tyre axis and a curved part (12B) extending axially inwardly from an inner end point (Q1) in the tyre axial direction of the tapered part (12A) to a maximum diameter portion (14) exceeding the inner end point (Q1) of the tapered part (12A) to the outside in the tyre radial direction, and the ratio LT/LM between the length LT in the tyre axial direction of the tapered part (12A) and the length LM in the tyre axial direction from the intersection (U1) at which the extending lines ($\ell$ 1, $\ell$ 2) of the flange (10) and the tapered part (12A) intersect each other to a maximum diameter point (U2) of the maximum diameter portion (14) being in the range of 0.50 to 0.95.

EP 0 453 300 A2

# FIG.1

The present invention relates to a motorcycle tyre and rim assembly capable of preventing a tyre from coming off its rim effectively even when the internal pressure is lowered during travel due to a flat tyre or the like, and hence enhancing the safety of travel.

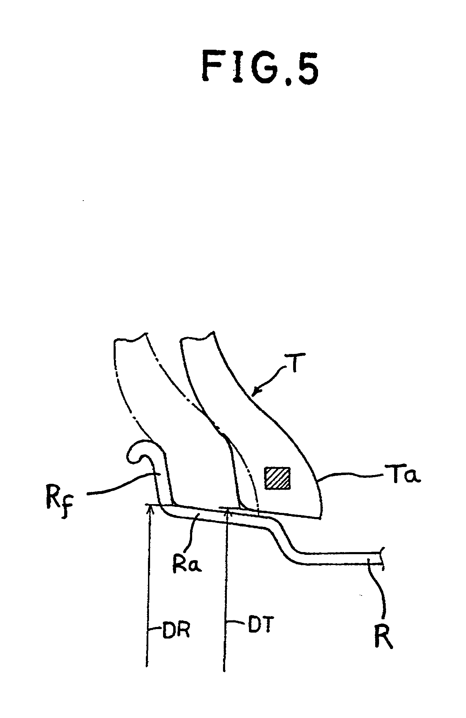

Generally, in a tyre and rim assembly, as shown in Figure 5, the bead heel diameter DT of a tyre T is set somewhat smaller (usually about 1.0 to 1.8mm) than the heel diameter DR of a rim R, and on inflating with an internal pressure after mounting the tyre T on the rim R, the bead region Ta of the tyre T is pressed outwardly against the rim flange Rf in the tyre axial direction, thereby firmly combining the two into one body.

The rim R used in such an assembly is conventionally as shown in Figure 5 and comprises a bead seat Ra for receiving the bottom surface of the bead region Ta. The seat Ra is inclined downwardly towards the tyre equator at an angle of 0 to 5 degrees to the tyre and wheel axis and so when the internal pressure of the tyre is lowered due to flat tyre or the like, the bead region Ta can move axially inwardly along and down the bead seat Ra, thereby lowering the fitting power or holding force and particularly as a result of steering forces applied to the tyre by manipulation of the handle bars, the bead region Ta is prone to come off the bead seat Ra. This is known as dislodgement.

In particular, since a motorcycle is an unstable vehicle, such rim dislodgement may spoil the steering performance, induce falling off of the rider or other serious accident, and so greatly impedes safety.

It is hence a primary object of the invention to provide a tyre and rim assembly capable of effectively preventing dislodgement of the tyre and thus enhancing safety.

According to one aspect of the present invention a tyre and rim assembly comprises a tyre for a motorcycle having a pair of bead regions and a rim holding the bead regions of the tyre, characterised in that the rim has a flange for supporting an outside surface of the tyre bead region, a rim seat for supporting a bottom surface of the bead region and a curved region connecting smoothly between a lower end point in the tyre radial direction of the flange and an outer end point in the tyre axial direction of the rim seat the said rim seat comprising a straight tapered part extending inwardly in the tyre axial direction from the outer end point of the rim seat and being inclined upwardly towards the tyre equator at an angle θ in the range of 4 to 8 degrees with respect to the tyre axis and a curved part extending axially inwardly from an inner end point in the tyre axial direction of the tapered part to a maximum diameter portion exceeding the inner end point of the tapered part to the outside in the tyre radial direction, and the ratio LT/LM between the length LT in the tyre axial direction of the tapered part and the length LM in the tyre axial direction from the intersertion at which the extending lines of the flange and the tapered part intersect each other to a maximum diameter point of the maximum diameter portion being in the range of 0.50 to 0.95.

As mentioned above, the rim seat has a tapered part inclined upwardly towards the tyre equator, and therefore the fitting force between the bead region and rim seat generates a partial force for thrusting the bead region axially outwardly along the tapered part. This partial force increases when the bead region is moved inwardly and the bead region is thus pressed outwardly to the flange even when the tyre internal pressure drops such as due to a flat tyre or the like, so that seating of the bead region is secure.

Still more, the tapered part and the maximum diameter portion can inhibit ride-over of the bead region due to an applied external force, and together with the thrusting by the partial force, rim dislodgement of the tyre may be effectively prevented.

Besides, since the rim has a smooth curved part inside the tapered part, the bead region may be smoothly guided axially outwardly along the curved part by inflation with internal pressure when mounting the rim, thereby preventing marked drop of rim composition.

An embodiment of the present invention will now be described by way of example, referring to the attached drawings, in which:

Figure 1 is a sectional view showing an embodiment of the invention;

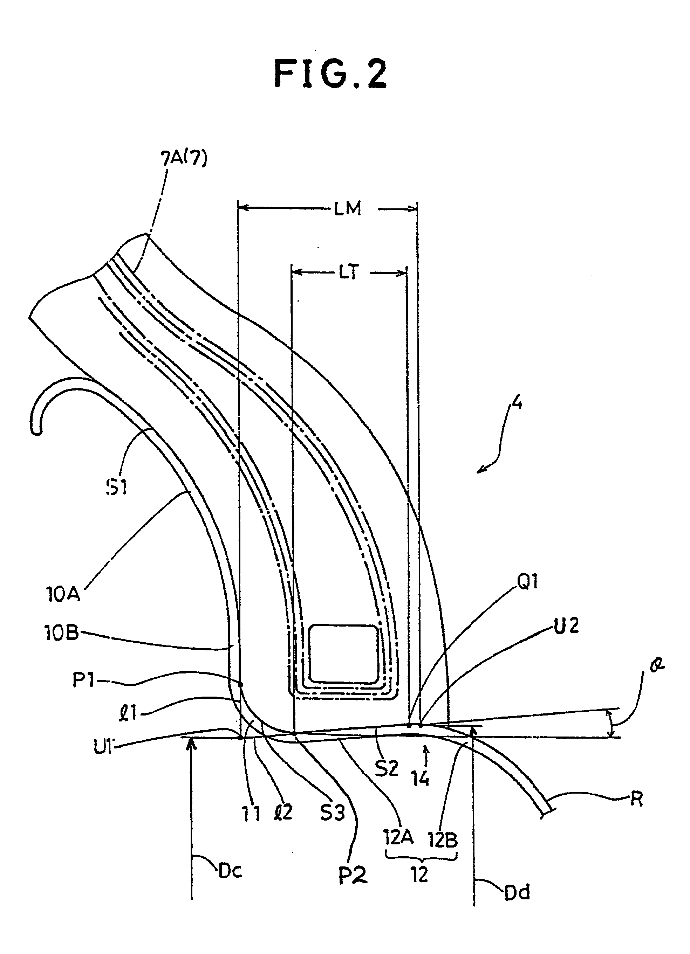

Figure 2 is a sectional view magnifying the bead region and rim;

Figure 3 is a diagram emphasising the taper region and maximum diameter part;

Figure 4 is a diagram showing the action; and

Figure 5 shows a prior art assembly.

A tyre T is a motorcycle tyre on a rim R which tyre T has a tread region 2, two sidewall regions 3 each extending inwardly in the tyre radial direction from both ends of the tread region 2 and two bead regions 4 each located at the inward end of the sidewall region 3. The tyre T has a toroidal carcass 7 provided between the bead regions 4.

The tread region 2 extends curvedly along the contour of the crown region of the carcass 7. The tread width in the tyre axial direction exceeds the maximum width of the sidewall region 3, thereby providing the ability to maintain camber thrust.

The carcass 7 is composed of at least one, in this embodiment three, carcass plies 7A extending from the tread region 2 through the sidewall regions 4 and folded around a bead core 5 in the bead region 4. Each folded-back part of the carcass plies 7A is terminated at a different height, so that stress concentration at the folded edges is alleviated.

Each carcass ply 7A is, in this embodiment, formed by carcass cords of organic fibres such as nylon, rayon or polyester arranged at an angle of 35 to 70 degrees to the tyre equator, and the carcass 7 has a cross ply structure in which the carcass cords are intersected mutually between the carcass plies 7A.

Alternatively for the carcass 7, a semi-radial structure or a radial structure may also be favourably employed, and the number of carcass plies used therein, the cord angle, and cord material may be properly determined depending on the required tyre performance.

The bead core 5 is formed in the creel type by winding a strip of steel bead cords arranged parallel to each other, and the bead region 4 reinforced by the annular bead core 5 buried in bead rubber.

The rim R comprises a pair of flanges 10 each providing a tyre engaging flange for a tyre bead surface S1, a pair of tapered rim seats 12 each extending inwardly from the flange 10 to a curved region 11 to receiving the bottom surface S2 of the bead region 4, and a well region 13 between the rim seats 12 to allow and assist tyre fitting and stripping.

The flange 10 has a curved main body 10A to match the outside tyre bead surface S1 and an upright piece 10B extending inwardly in the tyre radial direction from the main body 10A approximately at right angles to the tyre axis, in this example. The front part of the main body 10A is bent back, and the lower end point P1 of the flange 10 is the inward edge in the tyre radial direction, of the upright piece 10B. In this case "approximately at right angle". means an angle of within 10 degrees to the vertical line at right angles to the tyre axis, and preferably, the upright piece 10B extends at an angle of 5 degrees or less to the vertical line. When the flange 10 is curved over its entire length and the upright piece 10B is thus excluded, the lower end point P1 is defined as the inward edge of the main body 10A.

The rim seat 12 comprises a tapered part 12A and a curved part 12B.

The tapered part 12A extends in the tyre axial direction and inclines upwardly towards the tyre equator at an angle $\theta$ of 4 to 8 degrees with respect to the tyre axial line parallel to the tyre axis. The curved region 11 then connects smoothly between the lower end point P1 of the flange 10 and the outer end point P2 which is the outer end in the tyre axial direction of the tapered part 12A. The curved region 11, in this embodiment, has a single arc shape the centre of which is at the tyre inner space side.

The curved part 12B of the rim seat 12 is smoothly continuous to the tapered part 12A. The curved part 12B extends curvedly inwardly in the tyre axial and radial direction from the inner end point Q1 in the tyre axial direction of the tapered part 12A so as to have a maximum diameter portion 14 exceeding the inner end point Q1 to the outside in the tyre radial direction. The inner end of the curved part 12B is connected to the well region 13.

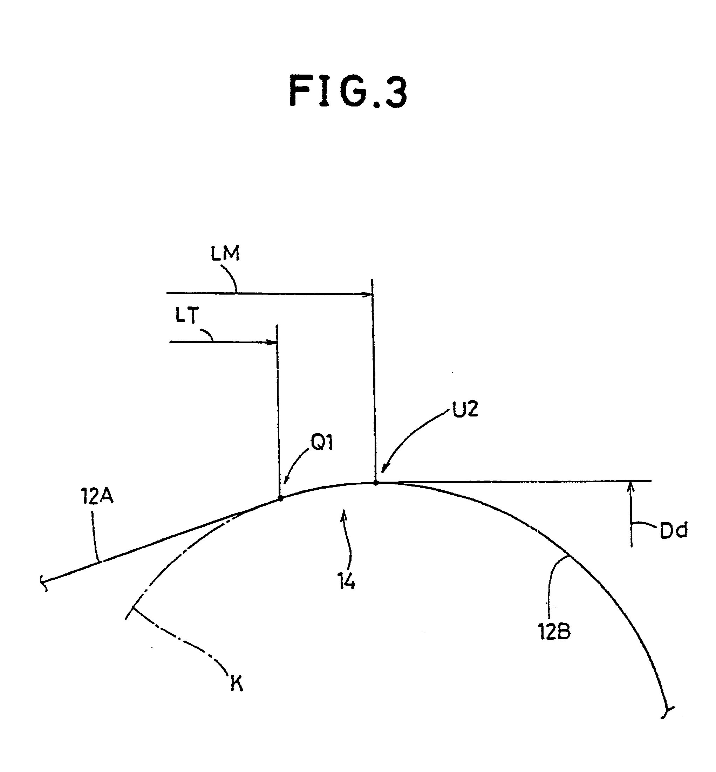

This maximum diameter portion 14 of the curved part 12B, as shown greatly magnified in Figure 3, is formed by the curved part 12B being along the arc K having a centre outside the tyre inner space and contacting the tapered part 12A at its inner end point Q1.

The bead region 4 has an outline profile to suit and match the rim R, from the main body 10A of the flange 10 to a position beyond the maximum diameter point U2 of the maximum diameter portion 14 axially inwardly. Therefore the bottom surface S2 of the bead region 4 does not include the horizontal plane parallel to the tyre axis, and the heel surface S3 linking the outside surface S1 and the bottom surface S2 are smoothly curved along the curvature region 11.

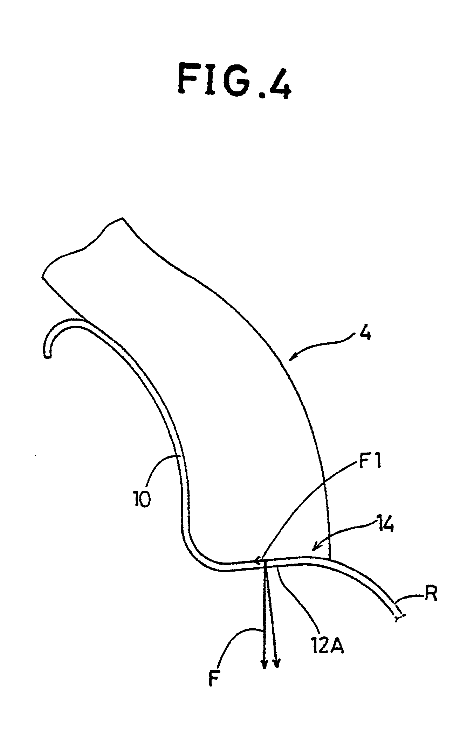

Thus, the tyre and rim assembly 1 of the invention has a tapered part 12A inclining upwardly toward the tyre equator face tyre, and therefore as shown in Figure 4, by the fitting force F of the bead region 4 and the rim seat 12, the partial force F1 thrusting the bead region 5 outward in the tyre axial direction along the tapered part 12A is generated. This partial force F1 increases along with the deviation of position of the bead region 4, and even when the tyre inner pressure is lowered, the bead region 4 is pressed against the flange 10, so that the bead region 4 may be seated securely.

Meanwhile, when a transverse force acts on the tyre, the tapered part 12A and the maximum diameter portion 14 prevent the bead region 4 from climbing over, thereby effectively preventing rim dislodgement of the tyre together with the thrusting by the partial force F1.

The rim R has the curved part 12B, and the heel portion of the bead region 4 smoothly curved, and therefore by inflation pressure on assembling of the tyre to the rim, the bead region 4 is smoothly guided axially outwardly along the curved part 12B, and significant lowering of the rim composition is arrested. In addition, the curved part 12B also helps to decrease local contact or rub with tyre tube 9 so as to prevent damage of the tube 9.

To exhibit the bead retention effect most effectively, the ratio LT/LM of the length LT to the length LM should be between 0.5 and 0.95. The length LT is the length in the tyre axial direction of the tapered part 12A. The length LM is the length in the tyre axial direction from the intersection U1 of the extension line $\ell$ 1 of the flange 10 and the extension line $\ell$ 2 of the tapered part 12A to the maximum diameter point U2 of the maximum diameter portion 14.

The ratio LT/LM and the angle θ above were proved to be effective by various tests the results of one of which are shown in Table 1.

Table 1 shows the relation of the ratio LT/LM, angle θ and the rim dislodgement resistance of a flat tyre in which the rim dislodgement resistance is indicated by an index setting the rim dislodgement resistance for an angle θ of 1 degree and ratio LT/LM of 0.5 at 100. The greater is the index, the better the rim dislodgement resistance. In a convention tyre by comparison the rim dislodgement resistance on this test was 90 or less.

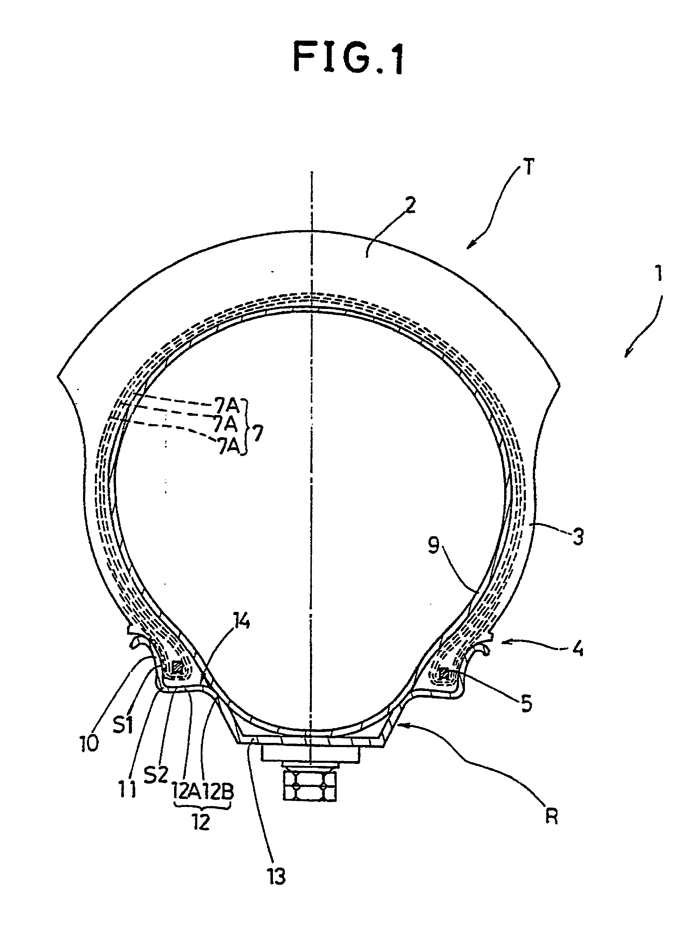

In this test, the tyre and rim assembly shown in Figure 1 was used, and the running time was measured until the rim was dislodged by travelling at a specific speed on an ordinary motocross course at a tyre inner pressure of 0, and the index is the mean of the tyre size of 80/100-21, 110/90-19, and 110/100-18.

Thus, when the angle θ is less than 4 degrees, and the ratio LT/LM is less than 0.5, the rim dislodgement resistance is insufficient.

However, if the angle θ exceeds 8 degrees, and the ratio LT/LM is over 0.95, the fitting force of the tyre T and the rim R is excessive, and it is too difficult to dismount the tyre T from the rim R at the time of repairing a flat tyre or the like, and the inflation pressure is excessive for tyre to rim assembly.

In this example, meanwhile, in order to realise both the rim dislodgement prevention and the rim composition, moreover, the ratio Dd/Dc of the rim diameter Dc which is the distance in the tyre radial direction between the intersections U1 to the maximum diameter Dd which is the distance in the tyre radial direction between the maximum diameter points U2 is defined within 1.002 to 1.007.

In the invention, the tyre T may be formed also as a tubeless tyre, and the tyre structure may be freely set depending on the required tyre performance, and it also may be formed as a tyre for a bicycle, aside from motorcycle.

## T A B L E   1

| Angle θ / Ratio LT/LM | 1 deg. | 3 deg. | 4 deg. | 6 deg. | 8 deg. | 10 deg. |
|---|---|---|---|---|---|---|
| 0.3 | 90 | 90 | 95 | 100 | 105 | 110 |
| 0.5 | 100 | 100 | 105 | 120 | 135 | 150 |
| 0.75 | 100 | 100 | 110 | 130 | 140 | 170 |
| 0.95 | 100 | 105 | 120 | 150 | 180 | 240 |
| 0.98 | 105 | 110 | 160 | 190 | 200 | 160 |

## Claims

1. A tyre and rim assembly comprising a tyre (T) for a motorcycle having a pair of bead regions (4) and a rim (R) holding the bead regions (4) of the tyre (T), characterised in that the rim (R) has a flange (10) for supporting an outside surface (S1) of the tyre bead region (4), a rim seat (12) for supporting a bottom surface (S2) of the bead region (4) and a curved region (11) connecting smoothly between a lower end point (P1) in the tyre radial direction of the flange (10) and an outer end point (P2) in the tyre axial direction of the rim seat the said rim seat (12) comprising a straight tapered part (12A) extending inwardly in the tyre axial direction from the outer end point (P2) of the rim seat (12) and being inclined upwardly towards the tyre equator at an angle θ in the range of 4 to 8 degrees with respect to the tyre axis and a curved part (12B) extending axially inwardly from an inner end point (Q1) in the tyre axial direction of the tapered part (12A) to a maximum diameter portion (14) exceeding the inner end point (Q1) of the tapered part (12A) to the outside in the tyre radial direction, and the ratio LT/LM between the length LT in the tyre axial direction of the tapered part (12A) and the length LM in the tyre axial direction from the intersection (U1) at which the extending lines (ℓ 1, ℓ 2) of the flange (10) and the tapered part (12A) intersect each other to a maximum diameter point (U2) of the maximum diameter portion (14) being in the range of 0.50 to 0.95.

2. A tyre and rim assembly according to claim 1 characterised in that the ratio Dd/Dc of the rim diameter Dc which is the distance in the tyre radial direction between the intersections (U1) to the maximum diameter Dd which is the distance in the tyre radial direction between the maximum diameter points (U2) is in the range of 1.002 to 1.007.

# FIG.1

# FIG.2

# FIG.3

# FIG.4

# FIG.5